# EUROPÄISCHE PATENTSCHRIFT

(11) **EP 1 024 972 B1**
(45) Veröffentlichungstag und Bekanntmachung des Hinweises auf die Patenterteilung: **27.03.2002**
(21) Anmeldenummer: 98962205.5
(22) Anmeldetag: 29.10.1998
(51) Int. Cl.: B60J 1/17, E05F 11/48

(54) **KRAFTFAHRZEUGTÜR**
MOTOR VEHICLE DOOR
PORTE DE VEHICULE A MOTEUR

(30) Priorität: 29.10.1997 DE 19747710
(43) Veröffentlichungstag der Anmeldung: 09.08.2000
(73) Patentinhaber: Brose Fahrzeugteile GmbH & Co. KG Coburg, 96450 Coburg (DE)
(72) Erfinder: FEDER, Roland, D-96479 Weitramsdorf (DE); BURGER, Stefan, D-95519 Ernstfeld (DE); NEUSS, Sabine, D-96047 Bamberg (DE); PLEISS, Eberhard, D-96253 Untersiemau (DE)
(74) Vertreter: Baumgärtel, Gunnar, Dr.
(86) Internationale Anmeldenummer: DE9803208
(87) Internationale Veröffentlichungsnummer: WO9921728

(56) Entgegenhaltungen:
- EP-A- 0 243 325
- DE-U- 8 309 452
- FR-A- 2 626 534
- US-A- 5 090 158

## Beschreibung

Die Erfindung betrifft eine Kraftfahrzeugtür mit einer Trägerplatte für mechanische und/oder elektrische Komponenten nach dem Oberbegriff des Patentanspruchs 1.

Bekannt sind Trägerplatten aus Metall, insbesondere aus Stahlblech, sowie aus Kunststoff, die durch Spritzgießen hergestellt werden und einen Teil eines großflächigen Ausschnitts in einer Türinnenverkleidung abdecken. Darauf vormontierte mechanische und elektrische Komponenten werden vor dem Einbau in die Kraftfahrzeugtür geprüft und ggf. justiert. Um die Tür in einen hinreichend abgegrenzten Naß- und Trockenraum aufzuteilen, wird im allgemeinen der Ausschnitt im Türinnenblech zusätzlich großflächig durch eine Abdeckfolie abgedichtet.

Aus dem Gebrauchsmuster DE 83 09 452 U1 ist eine Kraftfahrzeugtür bekannt, deren inneres Tragwerk einen großflächigen Ausschnitt aufweist, der durch eine Türinnenverkleidung abgedeckt ist. Diese Türinnenverkleidung ist mit einer Klappe versehen, die bei Bedarf aufgeklappt werden kann, um einen Teil des großflächigen Türausschnitts freizulegen, so daß durch diesen Ausschnitt hindurch Montagearbeiten durchgeführt werden können.

Der Erfindung liegt die Aufgabe zugrunde, eine Kraftfahrzeugtür der eingangs genannten Art derart weiterzuentwikkeln, daß ihre Herstellung effizienter und kostengünstiger wird und gleichzeitig die Bedingungen zur Integration der vorzumontierenden Bauteile in die Kraftfahrzeugtür verbessert werden.

Erfindungsgemäß wird diese Aufgabe durch die Schaffung einer Kraftfahrzeugtür mit den Merkmalen des Patentanspruchs 1 gelöst.

Danach sind die Trägerplatte und zumindest ein Teil der Türinnenverkleidung als eine in einem Werkzeug gemeinsam hergestellte Baugruppe ausgebildet, wobei die Trägerplatte und die Türinnenverkleidung über einen in diesem Werkzeug gleichzeitig hergestellten Verbindungsbereich klappbar miteinander verbunden sind.

Hierdurch läßt sich eine vormontierbare und ggf. vorprüfbare Baueinheit bilden, die neben der Trägerplatte und einem Teil der Türinnenverkleidung noch die auf die Trägerplatte bzw. die Türinnenverkleidung montierten Funktionselemente, wie z.B. einen Fensterheber, ein Türschloß, einen Lautsprecher, ein Türsteuergerät, einen Seitenairbag und dergleichen umfaßt.

In einer bevorzugten Ausführungsform der Erfindung bestehen die Trägerplatte und das Teil der Türinnenverkleidung zumindest teilweise aus Kunststoff, und sie sind über ein Scharnier miteinander verbunden.

Die Trägerplatte und das Teil der Türinnenverkleidung können als Spritzgußteile ausgebildet sein, die gemeinsam in einem Spritzwerkzeug hergestellt werden, oder auch als auf der Basis eines schlauchförmigen Grundkörpers ausgebildete Blasformteile.

Gemäß einer Variante der Erfindung sind die Trägerplatte und das Teil der Türinnenverkleidung als eine einstückige Einheit ausgebildet. Für eine einteilige Ausbildung von Trägerplatte und Türinnenverkleidung eignen sich vor allem Kunststoffe. Neben der Möglichkeit der Anwendung der Spritzgußtechnik zur Herstellung des aus Trägerplatte und Türinnenverkleidung bestehenden einstückigen Bauteils ist die Ausbildung dieses Bauteils auf der Basis eines schlauchförmigen Grundkörpers in Form eines Blasformteils besonders vorteilhaft, da die Blasformtechnik sehr kostengünstig anwendbar ist und gleichzeitig vielfältige Formgebungsmöglichkeiten eröffnet. Außerdem kann das Grundmaterial zur Ausbildung eines Filmscharniers herangezogen werden.

Die Anwendung der Blasformtechnik zur Herstellung der Einheit aus Trägerplatte und Türinnenverkleidung (bzw. mindestens eines Teiles davon) in Form eines im wesentlichen flächigen Bauteils führt automatisch zu einem doppelwandigen Element, dessen Wandungen in verschiedenen Bereichen hinsichtlich ihrer äußeren Kontur an die konkreten Bedürfnisse des jeweiligen Einzelfalls angepaßt werden können. Darüber hinaus ist es möglich, die Wandungen punktförmig, linienförmig oder großflächig miteinander zu verbinden, um so die Steifigkeit der Trägerplatte zu erhöhen oder abgedichtet Durchbrüche zu ermöglichen. Durch das partielle Verbinden der gegenüberliegenden Wandungen können auch mehrere voneinander getrennte Hohlräume geschaffen werden, die unterschiedlich nutzbar sind. Die sich hierbei ergebenden Synergieeffekte führen vor allem zu Einsparungen bei den Herstellungs- und Montagekosten sowie zu einer Verringerung des Gewichts der Fahrzeugtür.

Insbesondere wenn es sich bei der Trägerplatte und dem Teil der Türinnenverkleidung um eine einstückige Baueinheit handelt, kann das Scharnier vorteilhaft als Filmscharnier ausgebildet sein, wobei auch ein Gelenkband oder ein Gewebeteil vorgesehen sein kann, das mit den Randbereichen der Trägerplatte sowie dem zugehörigen Teil der Türinnenverkleidung verbunden ist.

Gemäß einer weiteren Variante der Erfindung sind die Trägerplatte und das Teil der Türinnenverkleidung über ein Drehscharnier miteinander verbunden. Dieses kann aus separaten, einerseits an der Trägerplatte und andererseits an dem Teil der Türinnenverkleidung vorgesehenen Scharnierbereichen bestehen, wobei die beiden Scharnierbereiche in einem Werkzeug (insbesondere einem Spritzwerkzeug) zunächst als eine einstückige Einheit hergestellt sind, die sich durch das Abbrechen von Verbindungselementen in zwei Scharnierbereiche trennen läßt.

Diese Variante der Erfindung ist auch dann vorteilhaft, wenn die Trägerplatte und die Türinnenverkleidung aus unterschiedlichen Materialien bestehen sollen. Als Materialien für die Trägerplatte eignen sich hierbei insbesondere Metallblech, Metallguß, Spritzgußteile oder Blasformteile aus Kunststoff sowie Faserpreßstoffe aus Hanf, Holz etc.

Ferner können nach einer Weiterbildung der Erfindung an der Trägerplatte und/ oder an dem Teil der Türinnenverkleidung Rastelemente angeformt sein, die eine Arretierung der beiden um die Scharnierachse schwenkbaren und somit aufeinander klappbaren Teile erlauben. Dadurch wird eine sichere Handhabung während des Transports und der Montage gewährleistet. Diese Arretierung sollte lösbar sein, um im Bedarfsfall einen Service an den von der Türinnenverkleidung abgedeckten, auf der Trägerplatte angeordneten Bauteilen und Baugruppen zu ermöglichen. Sofern die Notwendigkeit des Austauschs der Türinnenverkleidung besteht, muß diese von der Trägerplatte abgetrennt werden. Hierzu sollte die Scharnierverbindung zwischen der Trägerplatte und der Türinnenverkleidung ebenfalls lösbar ausgeführt sein, beispielsweise durch die Möglichkeit des Durchschneidens, mittels einer Sollbruchstelle oder einer Reißlinie oder ähnlicher geeigneter technischer Mittel.

Vorzugsweise überdeckt die Türinnenverkleidung nur einen Teil des großflächigen Türausschnitts im Türinnenblech und hält die für Montagearbeiten notwendigen Räume und Flächen frei.

Zur Vereinfachung der Führung elektrischer Leitungen können auf der Trägerplatte und der Türinnenverkleidung einander zugeordnete Kontakte vorgesehen sein, die mit dem Zusammenklappen von Trägerplatte und Türinnenverkleidung die notwendigen elektrischen Verbindungen herstellen. Diese elektrischen Kontakte können in vorteilhafter Weise auch mit den oben beschriebenen Rastelementen kombiniert werden und somit gleichzeitig die Positionierung der Trägerplatte und der Türinnenverkleidung zueinander sowie deren Verriegelung übernehmen.

Ein wesentlicher Vorteil aller oben beschriebenen Varianten der Erfindung liegt darin, daß ein Modul geschaffen wird, welches sämtliche mechanischen, elektrischen und elektronischen Komponenten der Fahrzeugtür umfassen kann und somit eine umfassend vorprüfbare und vormontierbare Einheit darstellt. Hierdurch lassen sich die Qualität und Effizienz der Türmontage steigern. Durch die gleichzeitige Herstellung von Trägerplatte und Türinnenverkleidung in einem Werkzeug (insbesondere Spritzwerkzeug) ergibt sich ein weiterer Rationalisierungseffekt.

Nachfolgend wird die Erfindung anhand eines Ausführungsbeispiels und der zugehörigen Figuren näher erläutert.

Es zeigen:
- Fig. 1: eine Ansicht der Trockenraumseite einer Trägerplatte und eine Ansicht der der Fahrzeugtür zugewandten Seite eines mit der Trägerplatte einstükkig verbundenen Teils der Türinnenverkleidung, ausgerüstet mit einer Vielzahl von Funktionseinheiten;
- Fig. 2: die einstückige Einheit aus Trägerplatte und Türinnenverkleidung gemäß Fig. 1, jedoch nach dem Zusammenklappen von Trägerplatte und Türinnenverkleidung um das verbindende Scharnier;
- Fig. 3: eine Naßraumansicht der Trägerplatte;
- Fig. 4: eine Ansicht der Innenseite der Fahrzeugtür nach dem Einbau der aus Trägerplatte und Türinnenverkleidung bestehenden Einheit in eine Türkarosserie;
- Fig. 5: einen Querschnitt durch eine Trägerplatte mit mehreren Hohlräumen, Versteifungen und einem Durchbruch;
- Fig. 6: eine Darstellung separater Scharnierbereiche, die an der Trägerplatte bzw. der Türinnenverkleidung angeformt sind;
- Fig. 7: eine Darstellung von Scharnierbereichen, die über eine separate Scharnierachse miteinander verbunden sind.

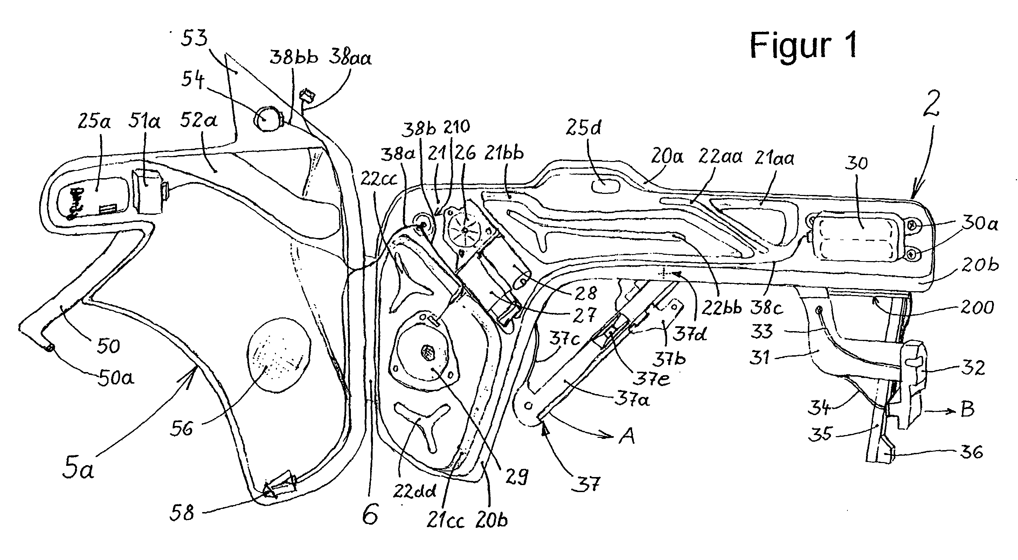

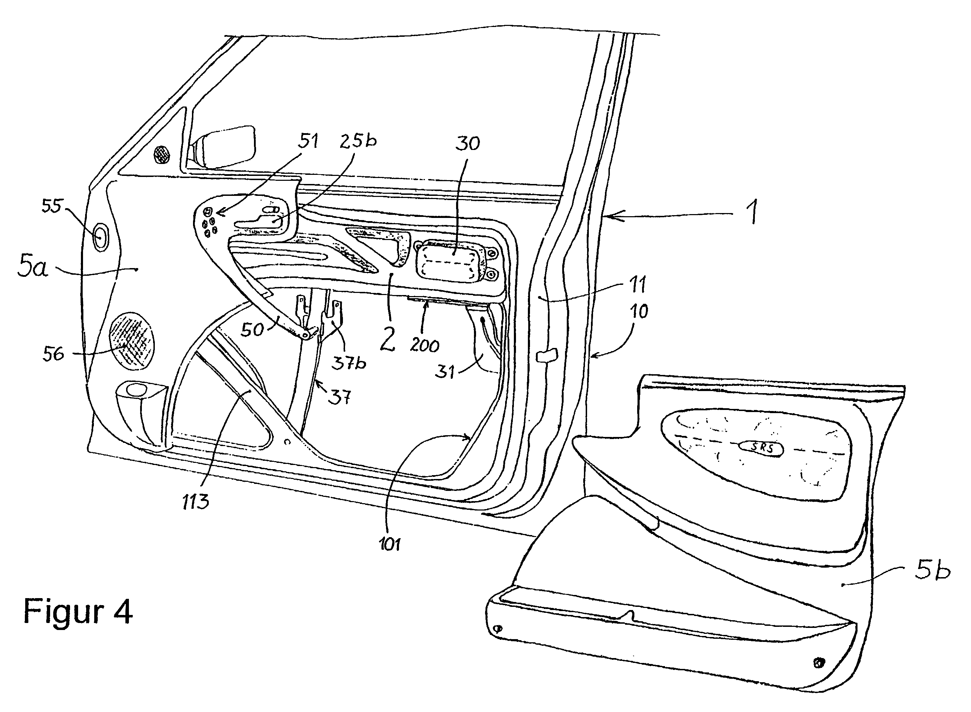

Gemäß dem Ausführungsbeispiel von Fig. 1 (vgl. auch Fig. 4) ist eine Trägerplatte 2 vorgesehen, die nur einen Teil des Ausschnitts 101 im Türinnenblech 11 abdeckt. Dies gilt im übertragenen Sinne auch für den über ein Filmscharnier 6 mit der Trägerplatte 2 verbundenen Teil 5a der Türinnenverkleidung, der wiederum nur einen Teil der Trägerplatte 2 überdeckt und einen zur Montage des Fensterhebers 37 und des Schlosses 32 ausreichenden Freiraum beläßt.

Fig. 1 zeigt die beiden durch das Scharnier 6 einstückig miteinander verbundenen Teile 2 und 5a in " aufgeklappter" Position, so wie sie aus dem Werkzeug entnommen werden. Sofern als Herstellungsverfahren die Blasformtechnik gewählt wird, bei der auf der Basis eines schlauchförmigen Grundkörpers aus thermoplastischem Material unter Anwendung von Wärme und Druckluft in einem Formwerkzeug das gewünschte Produkt entsteht, wird der Scharnierbereich als Filmscharnier 6 ausgebildet, in dem die beiden Wandungen des Blasformteils miteinander verbunden und ggf. noch etwas geschwächt werden. Stellt man das einstückige Bauteil jedoch durch Kunststoffspritzen her, so kann der Scharnierbereich 6 auch durch separate in das Spritzwerkzeug einzulegende Elemente gebildet werden. Hierzu eignen sich z.B. Gewebeeinlagen oder Gelenkverbindungen.

Soweit der Randbereich 20a der Trägerplatte 2 dem Randbereich des Ausschnitts 101 des Türinnenblechs 11 zugeordnet ist, soll durch diese Überdeckung eine hinreichend gute Abdichtung erfolgen. Dies kann beispielsweise durch ein geeignetes Dichtungselement erreicht werden, das auf der Naßraumseite der Trägerplatte im Randbereich 20a angeordnet wird. Der verbleibende Bereich des Ausschnitts 101, der an den Randbereich 20b der Trägerplatte angrenzt, kann in vorteilhafter Weise von einer maßgenau konfektionierten (nicht dargestellten) Abdeckfolie abgedeckt werden, was Material und Gewicht spart. Zur Befestigung der Abdeckfolie im Randbereich 20b der Trägerplatte 2 sowie im (nicht von der Trägerplatte 2 abgedeckten) Randbereich des Ausschnitts 101 des Türinnenblechs 11 kann ein Klebemittel oder ein Mittel zur formschlüssigen oder klemmenden Befestigung Anwendung finden.

Die nachfolgende Beschreibung beschränkt sich auf ein als Blasformteil erzeugtes Bauteil, da diese Ausführungsvariante als besonders vorteilhaft angesehen wird. Dieses vergleichsweise kostengünstige Verfahren erlaubt eine vielfältige, an die jeweiligen Bedürfnisse angepaßte Gestaltung der Trägerplatte 2, wobei in einem Arbeitsschritt stets ein doppelwandiges Element entsteht. Gleichzeitig lassen sich großflächige Verbindungsbereiche 21 sowie linien- oder punktförmige Verbindungsstellen 21aa, 21bb, 21cc erzeugen, um dort Durchgangsöffnungen, Befestigungsöffnungen, voneinander abgegrenzte oder genau dimensionierte Hohlräume herzustellen oder um eine Verbesserung der Formstabilität der Trägerplatte 2 zu bewirken.

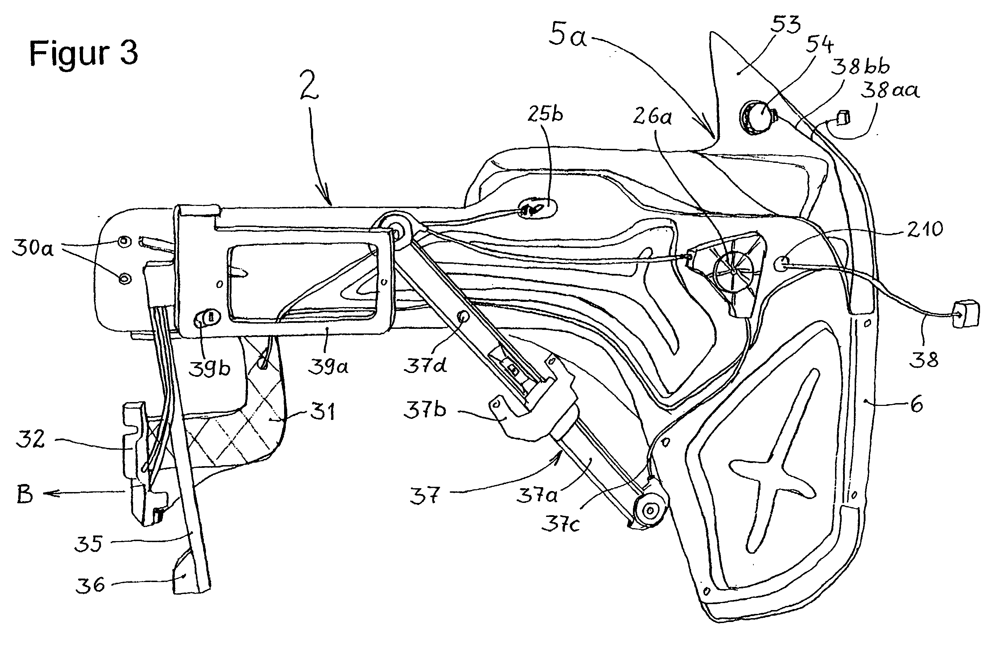

Die gezeigte Ausführungsform der Trägerplatte 2, deren naßraumseitige Ansicht in Fig. 3 dargestellt ist, besitzt in Verbindung mit der Türinnenverkleidung 5a einen sehr hohen Ausstattungsgrad an Funktionskomponenten, so daß bei der Türmontage nach Möglichkeit nur noch wenige Arbeiten ausgeführt werden müssen. Diese aus Trägerplatte 2 und Türinnenverkleidung 5a bestehende Einheit stellt ein vorprüfbares Modul mit hohem Integrationsgrad dar, das eine Steigerung der Effizienz der Türproduktion erlaubt und die Wahrscheinlichkeit des Auftretens von Fehlern senkt.

Entsprechend den technischen Erfordernissen und den Anforderungen an die Fahrzeugtür 1 weisen die Trägerplatte 2 und die Türinnenverkleidung 5a unterschiedlich gestaltete Bereiche auf. Zur Abdichtung des Naßraumes, der zwischen der Trägerplatte 2 und dem Türaußenblech 10 liegt, besitzt die Trägerplatte 2 einen umlaufenden Randbereich 20a, 20b, in dem die beiden Wandungen aufeinander liegen. Weitere drei innerhalb des Randbereichs 20a, 20b geschlossen umlaufende linienartige Verbindungsstellen 21aa, 21bb, 21cc schließen separate Hohlräume ein, deren Wandungen durch sickenartige Versteifungen 22bb, 22cc, 22dd stabilisiert sind.

Einer der Hohlräume, der von der Verbindungsstelle 21cc begrenzt wird, fungiert als Resonanzraum für einen Lautsprecher 29; er ist zur Erzielung optimaler Klangergebnisse hinsichtlich seiner Größe, genau an den verwendeten Lautsprecher 29 angepaßt. Nach oben hin schließt sich ein relativ großer Verbindungsbereich 21 an, der zwischen den beiden von den Verbindungsstellen 21bb und 21cc eingegrenzten Hohlräumen eine Art Vertiefung bildet. Darin lagert die aus Motor 28, Getriebe 26 und Elektronik 27 bestehende Antriebs- und Steuereinheit, deren Abtriebswelle mit einer Seiltrommel 26a mit Gehäuse in Wirkverbindung steht. Die Antriebskraft wird über ein in Bowden 37c geführtes Seil entlang der Umlenkungen an den Enden der Führungsschiene 37a bis zum Mitnehmer 37b geführt, der auf der Führungsschiene 37a verschiebbar lagert und mit der Unterkante der Fensterscheibe verbindbar ist.

Gemäß den Darstellungen der Figur 1 bis 3 befindet sich die Führungsschiene 37a des Bowdenfensterhebers 37 in einer geneigten Transportposition und ist um die Schwenkachse 37b in Richtung des Pfeiles A in ihre Betriebsposition schwenkbar. Der Bolzen der Schwenkachse 37b ist vorzugsweise einstückig an die Trägerplatte 2 angeformt. Die Befestigung des Bowdenfensterhebers in der Türkarosserie erfolgt durch Schrauben, die durch die Achsen der Seilumlenkungen (insbesondere Seilrollen) geführt werden. Dadurch werden Belastungen der Trägerplatte 2 vermieden.

In dem Verbindungsbereich 21 ist auch eine Ducrhgangsöffnung 210 vorgesehen, durch die hindurch Kabel 38a, 38b feuchtigkeitsdicht geführt sind. Während das Kabel 38b zur Versorgung und Ansteuerung der Elektronikeinheit 27 des Elektromotors 28 dient, werden über das Kabel 38a der Außenspiegel, einem oberen Bereich der Türinnenverkleidung 5a angeordneter Hochtöner, der Schalterblock 51a zum Ansteuern der Fensterheber und des Außenspiegels sowie eine Fußraumleuchte 58 angeschlossen. Darüber hinaus sind in die Türinnenverkleidung 5a eine Griffschale 25a, ein Lautsprecher 56 und ein Luftkanal 52a zur Belüftung der Fensterscheiben integriert.

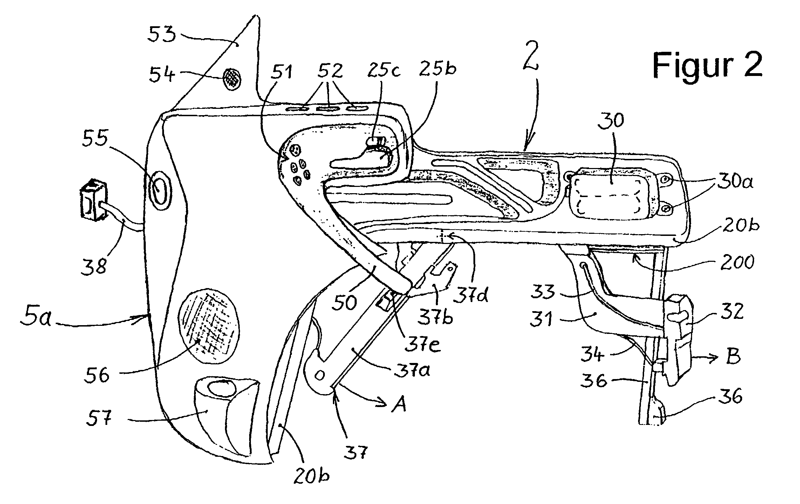

Wie aus Figur 2 ersichtlich ist, endet der Luftkanal 52a einerseits im Bereich des (nicht dargestellten) Armaturenträgers in einem Lufteinlaß und andererseits in Luftdüsen 52. Ebenfalls ersichtlich sind die zu dem Schalterblock 51a gehörenden Schalter 51 sowie einem Türinnenöffner 25b und einem Verriegelungsknopf 25c, welche in einer Griffschale 25a lagern. Elemente zur Kraftübertragung bzw. zur Übertragung von Stellbewegungen (z.B. Bowdenzüge oder Gestänge) sowie Kabel sind auf der Naßraumseite der Trägerplatte 2 geführt und verbinden die Betätigungselemente 25b, 25c mit dem Schloß 32. Auch das Schloß 32 ist in seiner Transportposition dargestellt und ist an einem Schloßhalter 31 befestigt, der verschiebbar an einer im Randbereich der Trägerplatte 2 integrierten Schiene 200 lagert. Nach dem Einbau der Trägerplatte 2 in die Türkarosserie wird das Schloß 32 in seine Funktionsposition geschoben und dort arretiert.

Die in Fig. 2 dargestellte zusammengeklappte Position von Trägerplatte 2 und Türinnenverkleidung 5a entspricht der Transport- und Anlieferposition. Nach dem Einbau des Moduls in eine Fahrzeugtür befinden sich der Fensterheber 37 und das Schloß 32 in ihren Betriebspositionen, was in Fig. 4 dargestellt ist. An der Führungsschiene 37a des Fensterhebers 37 ist eine Befestigungsstelle 37e vorgesehen, die mit dem Ende 50a eines Zuziehgriffes 50 verbunden wird.

Auf der Naßraumseite der Trägerplatte 2 lagert ein Außengriffhalter 39a, der über die Führungsschiene 35 für die Fensterscheibe mit dem Schloßhalter 31 in Verbindung steht und somit auch in Richtung B verschiebbar gehalten ist. An der Außengriffhalteplatte 39a ist ein Schließzylinder 39b vormontiert. Nach dem Einbau der Trägerplatte 2 und der Befestigung der Schlosses 32 wird die Außengriffhalteplatte 39a am Türaußenblech 1 fixiert. Anschließend kann der Außengriff mit Schale eingesetzt werden. Grundsätzlich ist es aber auch möglich, den Außengriff ebenfalls auf der Halteplatte 39a vorzumontieren.

Die Befestigung der Trägerplatte 2 am Türinnenblech 11 erfolgt vorzugsweise durch Schrauben in den sich überlappenden Randbereichen. Sofern ein Seitenairbag vorgesehen sein sollte, können seine Befestigungsstellen 30a gleichzeitig der Befestigung mit der Trägerplatte 2 in diesem Bereich dienen, wobei die Vormontage des Seitenairbags 30 durch einfache Clipse erfolgen kann. Um die Reaktionskräfte des Seitenairbags 30 auch bei einer wenig stabilen Trägerplatte 2 sicher abzustützen, sollte ein Eckbereich 110 des Türinnenblechs 11, vorzugsweise mit Verstärkungssicken, hinter den Seitenairbag 30 geführt werden.

An dieser Stelle sei darauf hingewiesen, daß das erfindungsgemäße einstückige Bauteil auch eine Trägerplatte und/oder eine Türinnenverkleidung umfassen kann, die den gesamten Ausschnitt 101 des Türinnenblechs 11 überdeckt. Die hierfür notwendigen Voraussetzungen sind beispielsweise gegeben, wenn,
- Trägerplatte und Türinnenverkleidung in "aufgeklappter" Position zur Montage angeliefert werden und/oder - Fensterscheibe und Schloß durch sogenannte "Blindmontage" montierbar sind und/oder
- in der Trägerplatte und ggf. in der Türinnenverkleidung lokale, durch geeignete Elemente verschließbare Montageöffnungen vorgesehen sind.

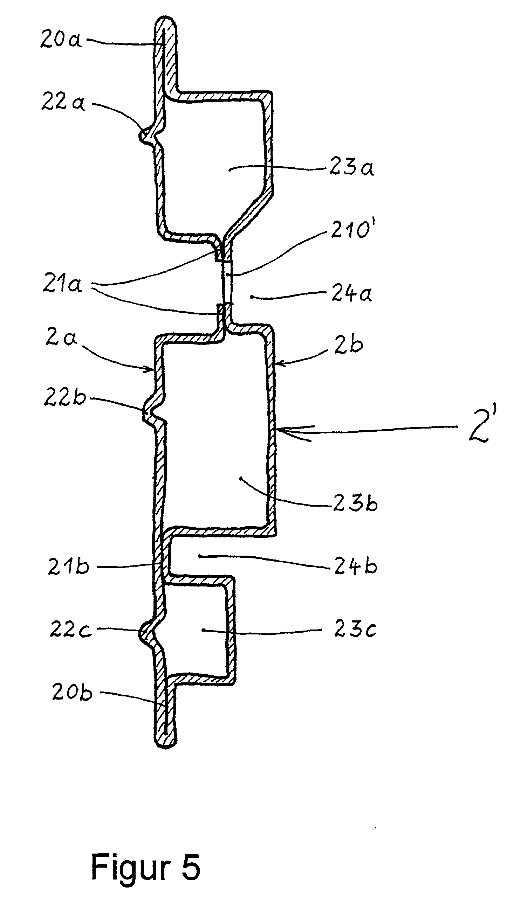

Anhand von Fig. 5, die in schematischer Form einen Schnitt durch eine fiktive Trägerplatte 2' zeigt, wird nachfolgend nochmals auf einige Wesensmerkmale bzw. Gestaltungsmöglichkeiten der Blasformtechnik hingewiesen.

In Analogie zur vorbeschriebenen Trägerplatte 2 liegen die Wandungen 2a, 2b in Randbereichen 20a, 20b aufeinander und bilden damit ideale Flächen zur Anbringung von Abdichtfolien oder Befestigungslöchern. Das Teil 2' weist 3 separate Hohlräume 23a, 23b, 23c auf, die durch Verbindungsstellen 21a, 21b voneinander getrennt sind. In eine der Verbindungsstellen 21a wurde außerdem eine Durchgangsöffnung 210' eingearbeitet, die sich zur Durchführung einer Antriebsachse, eines Betätigungsgestänges oder von Kabeln eignet. Die zwischen den Hohlräumen 23a, 23b, 23c liegenden Vertiefungen 24a, 24b können Funktionseinheiten, wie z.B. Motoren, eine Elektronik, ein Airbag oder dergleichen aufnehmen oder sie können zur Führung kraftübertragender Bauteile, wie Gestängen oder Bowdenzügen dienen. In die Wandung 2a sind zur Versteifung noch Sicken 22a, 22b, 22c eingeformt.

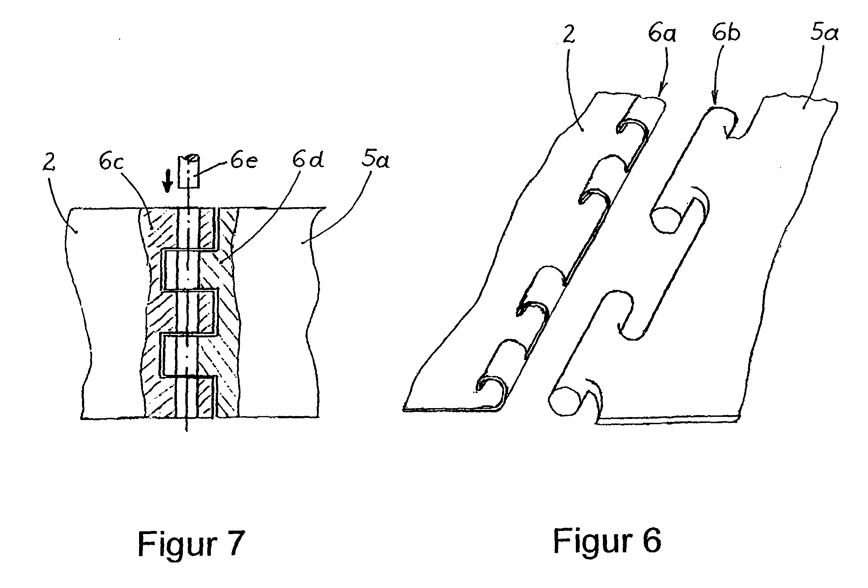

Die Figuren 6 und 7 zeigen weitere Beispiele der Ausbildung von Scharnierbereichen für eine modulare Einheit aus Trägerplatte 2 und Türinnenverkleidung 5a. Hierbei handelt es sich jeweils um Drehscharniere, die aus separaten, an der Trägerplatte 2 einerseits und dem Teil 5a der Türinnenverkleidung 5 andererseits vorgesehenen Scharnierbereichen bestehen. Solche Drehscharniere lassen sich bei der gleichzeitigen Herstellung der Trägerplatte und des Teils der Türinnenverkleidung in einem Werkzeug (insbesondere einem Spritzwerkzeug) ausbilden, wobei die beiden Scharnierbereiche nach der Entnahme der modularen Einheit aus dem Werkzeug zunächst noch miteinander verbunden sind. Durch Herausbrechen der entsprechenden Verbindungsstellen werden dann die beiden Scharnierbereiche getrennt, so daß zwei separate Scharnierbereiche entstehen, die die freie Drehbarkeit der Türinnenverkleidung relativ zu der Trägerplatte ermöglichen.

Die beiden in Fig. 6 dargestellten Scharnierbereiche 6a, 6b eignen sich insbesondere zur klappbaren Verbindung von Trägerplatte und Türinnenverkleidung, wenn diese nicht aus demselben Material hergestellt werden soll. Die Scharnierbereiche 6a, 6b können dabei clipsbar ausgeführt werden, so daß sich die Türinnenverkleidung und die Trägerplatte bei Bedarf voneinander trennen lassen.

Die in Figur 7 dargestellten Scharnierbereiche 6c, 6d sind identisch ausgeführt und bestehen aus einer Vielzahl kammartig angeordneter Ösen. Zur Verbindung der beiden Scharnierbereiche 6c, 6d wird eine separate Scharnierachse 6e verwendet, die die Ösen der Scharnierbereiche 6c, 6d durchgreift und die als separates Bauteil in das Spritzwerkzeug eingelegt werden kann, in dem die Trägerplatte und das zugehörige Teil der Türinnenverkleidung hergestellt werden.

### Bezugszeichenliste

- 1: Türkarosserie
- 10: Türaußenblech
- 11: Türinnenblech
- 101: Ausschnitt im Türinnenblech
- 110: Eckbereich des Türinnenblechs
- 111: Sicke
- 112: Befestigungsstellen
- 113: Strebe des Türinnenblechs

- 2: Trägerplatte
- 2': Trägerplatte
- 2a: Wandung
- 2b: Wandung
- 20a: Randbereich
- 20b: Randbereich
- 21: Verbindungsstelle/Verbindungsbereich
- 21a: Verbindungsstelle
- 21b: Verbindungsstelle
- 21aa: Verbindungsstelle
- 21bb: Verbindungsstelle
- 21cc: Verbindungsstelle
- 22a: Versteifung
- 22b: Versteifung
- 22c: Versteifung
- 22aa: Versteifung
- 22bb: Versteifung
- 22cc: Versteifung
- 22dd: Versteifung
- 23a: Hohlraum
- 23b: Hohlraum
- 23c: Hohlraum
- 24a: Vertiefung
- 24b: Vertiefung
- 25a: Schale des Türinnenöffner
- 25b: Türinnengriff
- 25c: Verriegelungsknopf
- 25d: Öffnung
- 26: Getriebe
- 27: Elektronikeinheit
- 28: Motor
- 29: Lautsprecher
- 200: Schiene
- 210: Durchgangsöffnung/Kabeldurchführung
- 210': Durchgangsöffnung

- 30: Sideairbag
- 30a: Befestigung
- 31: Schloßhalter
- 32: Schloß
- 33: Bowdenzug
- 34: Kabei
- 35: Führungsschiene für Fensterscheibe
- 36: Befestigungsbock
- 37: Bowdenfensterheber
- 37a: Führungsschiene
- 37b: Mitnehmer/Gleiter
- 37c: Bowden
- 37d: Schwenkachse
- 37e: Befestigungsstelle
- 38: Hauptkabel
- 38a: Kabel
- 38aa: Kabel
- 38b: Kabel
- 38bb: Kabel
- 38c: Kabel
- 39a: Außengriffhalter
- 39b: Schließzylinder

- 5: Türinnenverkleidung
- 5a: Teil der Türinnenverkleidung
- 5b: Teil der Türinnenverkleidung
- 50: Zuziehgriff
- 50a: abgewinkeltes Ende des Zuziehgriffs
- 51: Schalter
- 51a: Schaiterblock
- 52: Luftdüsen
- 52a: Luftkanal
- 53: Abdeckung Spiegeldreieck
- 54: Lautsprecher/Hochtöner
- 55: Lufteinlaß
- 56: Lautsprecherabdeckung
- 57: Dosenhalter
- 58: Fußraumleucht

- 6: Scharnier
- 6a: Scharnierbereich
- 6b: Scharnierbereich
- 6c: Scharnierbereich
- 6d: Scharnierbereich
- 6e: Scharnierachse

- A: Schwenkrichtung
- B: Verschieberichtung

## Patentansprüche

1. Kraftfahrzeugtür mit einem Türaußenblech (10) und einem mit einem Ausschnitt (101) versehenen Türinnenblech (11), wobei der Ausschnitt (101) von einer Trägerplatte (2) ganz oder teilweise abgedeckt ist, die mechanische und/oder elektrische Komponenten (27, 30, 32, 37, 38a, 38aa, 38b, 38bb, 38c), wie z.B. Fensterheber, Schloß, Seitenairbag, Elektronik und elektrische Kabel trägt, und mit einer Türinnenverkleidung (5), die auf der Fahrzeugtür zum Fahrzeuginnenraum hin angeordnet ist, wobei die Trägerplatte (2) und wenigstens ein Teil (5a) der Türinnenverkleidung (5) über einen Verbindungsbereich (6a, 6b, 6c, 6d, 6e) klappbar miteinander in Verbindung stehen,
**dadurch gekennzeichnet,**
**daß** die Trägerplatte (2) und das Teil (5a) der Türinnenverkleidung (5) als eine in einem Werkzeug gemeinsam hergestellte Baueinheit ausgebildet sind, wobei die Trägerplatte (2) und das Teil (5a) der Türinnenverkleidung (5) über einen in diesem Werkzeug gleichzeitig hergestellten Verbindungsbereich (6a, 6b, 6c, 6d) klappbar miteinander verbunden sind.

2. Kraftfahrzeugtür nach Anspruch 1, **dadurch gekennzeichnet, daß** die Trägerplatte (2) und das Teil (5a) der Türinnenverkleidung (5) zumindest teilweise aus Kunststoff bestehen.

3. Kraftfahrzeugtür nach Anspruch 1 oder 2, **dadurch gekennzeichnet, daß** die Trägerplatte (2) und das Teil (5a) der Türinnenverkleidung (5) über ein Scharnier (6, 6a, 6b, 6c, 6d, 6e) miteinander verbunden sind.

4. Kraftfahrzeugtür nach einem der vorhergehenden Ansprüche, **dadurch gekennzeichnet, daß** die Trägerplatte (2) und das Teil (5a) der Türinnenverkleidung (5) als Spritzgußteile ausgebildet sind.

5. Kraftfahrzeugtür nach einem der Ansprüche 1 bis 4, **dadurch gekennzeichnet, daß** die Trägerplatte (2) und das Teil (5a) der Türinnenverkleidung (5) auf der Basis eines schlauchförmigen Grundkörpers als Blasformteil ausgebildet sind.

6. Kraftfahrzeugtür nach einem der vorhergehenden Ansprüche, **dadurch gekennzeichnet, daß** die Trägerplatte (2) und das Teil (5a) der Türinnenverkleidung (5) als einstückige Baueinheit ausgebildet sind.

7. Kraftfahrzeugtür nach einem der vorhergehenden Ansprüche, **dadurch gekennzeichnet, daß** das Scharnier (6) als Filmscharnier ausgebildet ist.

8. Kraftfahrzeugtür nach einem der vorhergehenden Ansprüche, **dadurch gekennzeichnet, daß** das Scharnier als Gelenkwand ausgebildet ist und in die Randbereiche der Trägerplatte (2) und des Teiles (5a) der Türinnenverkleidung (5) mit eingespritzt ist.

9. Kraftfahrzeugtür nach einem der vorhergehenden Ansprüche, **dadurch gekennzeichnet, daß** das Scharnier (6) ein mit den Randbereichen der Trägerplatte (2) und dem Teil der Türinnenverkleidung (5a) verbundenes Gewebeteil ist.

10. Kraftfahrzeugtür nach einem der vorhergehenden Ansprüche, **dadurch gekennzeichnet, daß** die Trägerplatte (2) und das Teil (5a) der Türinnenverkleidung (5) über ein Drehscharnier (6a, 6b; 6c - 6e) miteinander verbunden sind.

11. Kraftfahrzeugtür nach Anspruch 10, **dadurch gekennzeichnet, daß** das Drehscharnier (6a, 6b; 6c - 6e) aus separaten, an der Trägerplatte (2) einerseits und dem Teil (5a) der Türinnenverkleidung (5) andererseits vorgesehenen Scharnierbereichen (6a, 6c bzw. 6b, 6d) besteht.

12. Kraftfahrzeugtür nach Anspruch 11, **dadurch gekennzeichnet, daß** die beiden Scharnierbereiche (6a, 6b; 6c, 6d) in einem Werkzeug gemeinsam mit der Trägerplatte (2) und dem Teil (5a) der Türinnenverkleidung (5) als eine einstückige Einheit hergestellt sind, die sich durch Abbrechen von Verbindungsbereichen in zwei Scharnierbereiche trennen läßt.

13. Kraftfahrzeugtür nach einem der vorhergehenden Ansprüche, **dadurch gekennzeichnet, daß** die Trägerplatte (2) und das Teil (5a) der Türinnenverkleidung (5) aus unterschiedlichen Materialien hergestellt sind.

14. Kraftfahrzeugtür nach einem der vorhergehenden Ansprüche, **dadurch gekennzeichnet, daß** die Türinnenverkleidung (5a) mit der Trägerplatte (2) durch einstückig angeformte Rastelemente verbindbar ist.

15. Kraftfahrzeugtür nach Anspruch 14, **dadurch gekennzeichnet, daß** die Verbindung zwischen Türinnenverkleidung und Trägerplatte über die Rastelemente lösbar ist.

16. Kraftfahrzeugtür nach einem der vorhergehenden Ansprüche, **dadurch gekennzeichnet, daß** an dem Teil (5a) der Türinnenverkleidung (5) und an der Trägerplatte (2) einander zugeordnete elektrische Kontakte vorgesehen sind, die nach dem Zusammenklappen des Teiles (5a) der Türinnenverkleidung (5) und der Trägerplatte (2) die Übertragung elektrischer Signale und/oder von elektrischer Antriebsenergie gewährleisten.

17. Kraftfahrzeugtür nach einem der vorhergehenden Ansprüche, **dadurch gekennzeichnet, daß** das Teil (5a) der Türinnenverkleidung (5) nach dem Zusammenklappen mit der Trägerplatte (2) nur solche Bereiche überdeckt, die nicht für Montagetätigkeiten, z.B. zur Befestigung eines Fensterhebers (37) oder eines Türschlosses (32), zugänglich sein müssen.

18. Kraftfahrzeugtür nach einem der vorhergehenden Ansprüche, **dadurch gekennzeichnet, daß** in den Bereichen, die für Montagetätigkeiten zugänglich sein müssen, Ausschnitte in der Türinnenverkleidung zugeordnet sind.

19. Kraftfahrzeugtür nach einem der vorhergehenden Ansprüche, **dadurch gekennzeichnet, daß** in der Tür eine Führungsschiene (37a) für einen Fensterheber (37) angeordnet ist und daß die Führungsschiene (37a) eine Befestigungsstelle (37e) für ein Ende (50a) eines Türgriffes (50) aufweist.

## Claims

1. Motor vehicle door having an outer door panel (10) and an inner door panel (11) provided with a cut-out section (101) wherein the cut-out section (101) is covered wholly or in part by a support plate (2) which supports mechanical and/or electrical components (27, 30, 32, 37, 38a, 38aa, 38b, 38bb, 38c) such as for example window lifter, lock, side airbag electronics and electric cables, and having a door inner trim panel(5) which is mounted on the vehicle door facing the interior of the vehicle, wherein the carrier plate (2) and at least a part of the door inner trim panel (5) are foldably connected to one another by a connection region (6a, 6b, 6c, 6d, 6e)
**characterised in that**
the support plate (2) and at least one part (5a) of the door inner trim panel(5) are formed as one structural unit which is made in one tool, wherein the support plate (2) and the part (5a) of the door inner trim panel (5) are foldably connected to one another by a connection region (6a, 6b, 6c, 6d, 6e) formed simultaneously in said tool.

2. Motor vehicle door according to claim 1 **characterised in that** the support plate (2) and the part (5a) of the door inner trim panel (5) consist at least in part of plastics.

3. Motor vehicle door according to claim 1 or 2 **characterised in that** the support plate (2) and the part (5a) of the door inner trim panel (5) are connected together through a hinge (6, 6a, 6b, 6c, 6d, 6e).

4. Motor vehicle door according to one of the preceding claims **characterised in that** the support plate (2) and the part (5a) of the door inner trim panel (5) are formed as injection moulded parts.

5. Motor vehicle door according to one of claims 1 to 4 **characterised in that** the support plate (2) and the part (5a) of the door inner trim panel (5) are formed as a blow moulded part on the basis of a tubular foundation body.

6. Motor vehicle door according to one of the preceding claims **characterised in that** the support plate (2) and the part (5a) of the door inner trim panel (5) are formed as one integral structural unit.

7. Motor vehicle door according to one of the preceding claims **characterised in that** the hinge (6) is formed as a film hinge.

8. Motor vehicle door according to one of the preceding claims **characterised in that** the hinge is formed as an articulated wall and is injection moulded into the edge area of the support plate (2) and the part (5a) of the door inner trim panel (5).

9. Motor vehicle door according to one of the preceding claims **characterised in that** the hinge (6) is a fabric part connected to the edge areas of the support plate (2) and the part of the door inner trim panel (5a).

10. Motor vehicle door according to one of the preceding claims **characterised in that** the support plate (2) and the part (5a) of the door inner trim panel (5) are connected together through a rotary hinge (6a, 6b; 6c-6e).

11. Motor vehicle door according to claim 10 **characterised in that** the rotary hinge (6a, 6b; 6c - 6e) consists of separate hinge areas (6a, 6c or 6b,6d) provided on the support plate (2) on one side and on the part (5a) of the door inner trim panel (5) on the other side.

12. Motor vehicle door according to claim 11 **characterised in that** the two hinge areas (6a, 6b; 6c, 6d) are made in one tool together with the support plate (2) and the part (5a) of the door inner trim panel (5) as one integral unit which can be separated into two hinge areas by breaking off the connecting areas.

13. Motor vehicle door according to one of the preceding claims **characterised in that** the support plate (2) and the part (5a) of the door inner trim panel (5) are made from different materials.

14. Motor vehicle door according to one of the preceding claims **characterised in that** the door inner trim panel (5a) is connectable to the support plate (2) through detent elements moulded on in one piece.

15. Motor vehicle door according to claim 14 **characterised in that** the connection between the door inner trim panel and the support plate is releasable through the detent elements.

16. Motor vehicle door according to one of the preceding claims **characterised in that** the part (5a) of the door inner trim panel (5), and the support plate (2) are provided with associated electrical contacts which after folding together the part (5a) of the door inner trim panel (5) and the support plate (2) guarantee the transfer of electrical signals and/or electric drive energy.

17. Motor vehicle door according to one of the preceding claims **characterised in that** after folding the part (5a) of the door inner trim panel (5) together with the support plate (2) the part (5a) of the trim only covers those areas which do not have to be accessible for assembly work, e.g. for fixing a window lifter (37) or a door lock (32).

18. Motor vehicle door according to one of the preceding claims **characterised in that** cut-out sections are assigned to the door inner trim panel in the areas which have to be accessible for assembly work.

19. Motor vehicle door according to one of the preceding claims **characterised in that** a guide rail (37a) is mounted in the door for a window lifter (37) and that the guide rail (37a) has a fastening point (37e) for an end (50a) of a door handle (50).

## Revendications

1. Porte de véhicule automobile comportant une tôle extérieure de porte (10) et une tôle intérieure de porte (11) pourvue d'une échancrure (101), l'échancrure (101) étant recouverte entièrement ou partiellement par une plaque porteuse (2) qui porte des composants mécaniques et/ou électriques (27, 30, 32, 37, 38a, 38aa, 38b, 38bb, 38c), tels que lève-vitre, serrure, airbag latéral, unité électronique et câbles électriques, et comportant un habillage intérieur de porte (5) agencé sur la porte de véhicule vers l'intérieur du véhicule, la plaque porteuse (2) et au moins une partie (5a) de l'habillage intérieur de porte (5) étant en liaison avec faculté de rabattement l'une avec l'autre via une zone de liaison (6a, 6b, 6c, 6d, 6e),
**caractérisée en ce que** :
la plaque porteuse (2) et la partie (5a) de l'habillage intérieur de porte (5) sont réalisées sous forme d'une unité structurelle fabriquée en commun dans un outil, la plaque porteuse (2) et la partie (5a) de l'habillage intérieur de porte (5) étant reliées l'une à l'autre avec faculté de rabattement via une zone de liaison (6a, 6b, 6c, 6d) réalisée simultanément dans cet outil.

2. Porte de véhicule automobile selon la revendication 1, **caractérisée en ce que** la plaque porteuse (2) et la partie (5a) de l'habillage intérieur de porte (5) sont constituées du moins en partie en matière plastique.

3. Porte de véhicule automobile selon l'une ou l'autre des revendications 1 et 2, **caractérisée en ce que** la plaque porteuse (2) et la partie (Sa) de l'habillage intérieur de porte (5) sont reliées l'une à l'autre via une charnière (6, 6a, 6b, 6c, 6d, 6e).

4. Porte de véhicule automobile selon l'une quelconque des revendications précédentes, **caractérisée en ce que** la plaque porteuse (2) et la partie (5a) de l'habillage intérieur de porte (5) sont réalisées sous forme de pièces coulées par injection.

5. Porte de véhicule automobile selon l'une quelconque des revendications 1 à 4, **caractérisée en ce que** la plaque porteuse (2) et la partie (5a) de l'habillage intérieur de porte (5) sont réalisées sous la forme d'un corps moulé par soufflage à partir d'un corps de base en forme de tuyau.

6. Porte de véhicule automobile selon l'une quelconque des revendications précédentes, **caractérisée en ce que** la plaque porteuse (2) et la partie (5a) de l'habillage intérieur de porte (5) sont réalisées sous forme d'une unité structurelle d'un seul tenant.

7. Porte de véhicule automobile selon l'une quelconque des revendications précédentes, **caractérisée en ce que** la charnière (6) est réalisée sous forme de charnière en film.

8. Porte de véhicule automobile selon l'une quelconque des revendications précédentes, **caractérisée en ce que** la charnière est réalisée sous forme de paroi articulée et est intégrée par injection dans les zones marginales de la plaque porteuse (2) et de la partie (5a) de l'habillage intérieur de porte (5).

9. Porte de véhicule automobile selon l'une quelconque des revendications précédentes, **caractérisée en ce que** la charnière (6) est une pièce en tissu reliée aux zones marginales de la plaque porteuse (2) et à la partie de l'habillage intérieur de porte (Sa).

10. Porte de véhicule automobile selon l'une quelconque des revendications précédentes, **caractérisée en ce que** la plaque porteuse (2) et la partie (5a) de l'habillage intérieur de porte (5) sont reliées l'une à l'autre via une charnière tournante (6a, 6b ; 6c à 6e).

11. Porte de véhicule automobile selon la revendication 10, **caractérisée en ce que** la charnière tournante (6a, 6b ; 6c à 6e) est constituée par des zones de charnière séparées (6a, 6c ou 6b, 6d) prévues sur la plaque porteuse (2) d'une part et sur la partie (5a) de l'habillage intérieur de porte (5) d'autre part.

12. Porte de véhicule automobile selon la revendication 11, **caractérisée en ce que** les deux zones de charnière (6a, 6b ; 6c, 6d) sont réalisées dans un outil en commun avec la plaque porteuse (2) et avec la partie (Sa) de l'habillage intérieur de porte (5) sous forme d'une unité d'un seul tenant qui se laisse séparer en deux zones de charnière par rupture de zones de liaison.

13. Porte de véhicule automobile selon l'une quelconque des revendications précédentes, **caractérisée en ce que** la plaque porteuse (2) et la partie (5a) de l'habillage intérieur de porte (5) sont constituées en matériaux différents.

14. Porte de véhicule automobile selon l'une quelconque des revendications précédentes, **caractérisée en ce que** l'habillage intérieur de porte (5a) peut être relié à la plaque porteuse (2) par des éléments d'enclenchement moulés d'un seul tenant.

15. Porte de véhicule automobile selon la revendication 14, **caractérisée en ce que** la liaison entre l'habillage intérieur de porte et la plaque porteuse via les éléments d'enclenchement est détachable.

16. Porte de véhicule automobile selon l'une quelconque des revendications précédentes, **caractérisée en ce qu'**il est prévu sur la partie (5a) de l'habillage intérieur de porte (5) et sur la plaque porteuse (2) des contacts électriques tournés l'un vers l'autre qui, après rabattement de la partie (Sa) de l'habillage intérieur de porte (5) et de la plaque porteuse (2), assurent la transmission de signaux électriques et/ou d'énergie motrice électrique.

17. Porte de véhicule automobile selon l'une quelconque des revendications précédentes, **caractérisée en ce qu'**après le rabattement avec la plaque porteuse (2), la partie (Sa) de l'habillage intérieur de porte (5) ne recouvre que de telles zones qui n'ont pas besoin d'être accessibles pour des travaux de montage, par exemple pour 1a fixation d'un lève-vitre (37) ou d'une serrure de porte (32).

18. Porte de véhicule automobile selon l'une quelconque des revendications précédentes, **caractérisée en ce que** dans les zones qui doivent être accessibles pour les travaux de montage, des échancrures associées sont prévues dans l'habillage intérieur de porte.

19. Porte de véhicule automobile selon l'une quelconque des revendications précédentes, **caractérisée en ce que** dans la porte est prévu un rail de guidage (37a) pour un lève-vitre (37), et **en ce que** le rail de guidage (37a) présente un emplacement de fixation (37e) pour une extrémité (50a) d'une poignée de porte (50).
